(19) Europäisches Patentamt

European Patent Office

Office européen des brevets

(11) **EP 2 876 375 A2**

(12) **EUROPEAN PATENT APPLICATION**

(43) Date of publication:
27.05.2015 Bulletin 2015/22

(21) Application number: 14194328.2

(22) Date of filing: 21.11.2014

(51) Int Cl.:
*F24D 3/14* *(2006.01)*   *F16L 11/11* *(2006.01)*
*F28F 1/10* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 22.11.2013  US 201361907948 P

(71) Applicant: **Schluter Systems L.P.
Plattsburgh, NY 12901 (US)**

(72) Inventor: **Slanik, Josef
Platsburgh, New York 12901 (US)**

(74) Representative: **Adam, Holger
Kraus & Weisert
Patentanwälte PartGmbB
Thomas-Wimmer-Ring 15
80539 München (DE)**

(54) **In-floor heating apparatuses**

(57)   A heated flooring assembly includes a base layer having a plurality of studs arranged in a grid pattern, the base layer operable to be coupled to a flooring surface. A screed layer is bonded to an upper surface of the base layer. A length of tubing has an outer surface and an inner surface, the length of tubing operable to carry a fluid that creates a temperature differential between the length of tubing and the screed layer. The length of tubing is retained between at least some of the studs. At least the outer surface of the length of tubing has at least one projection extending outwardly therefrom, the projection increasing a rate at which heat is transferred between the length of tubing and the screed layer as the fluid travels through the length of tubing.

EP 2 876 375 A2

**Description**

PRIORITY CLAIM

This application claims priority and benefit of and to U.S. Provisional Patent Application Serial No. 61/907,948, filed November 22, 2013, which is hereby incorporated herein by reference in its entirety.

BACKGROUND

Field of the Invention

The present invention relates generally to radiant heat systems. More particularly, the present invention **relates** to radiant heat systems installed within a floor of a room to thereby affect a temperature of the room.

SUMMARY OF THE INVENTION

In one aspect, the technology provides a heated flooring assembly, including a base layer having a plurality of studs arranged in a grid pattern. The base layer can be operable to be coupled to a flooring surface. A screed layer can be bonded to an upper surface of the base layer. A length of tubing can have an outer surface and an inner surface, the length of tubing operable to carry a fluid that creates a temperature differential between the length of tubing and the screed layer. The length of tubing can be retained between at least some of the studs, with at least the outer surface of the length of tubing having at least one projection extending outwardly therefrom, the projection increasing a rate at which heat is transferred between the length of tubing and the screed layer as the fluid travels through the length of tubing.

In accordance with another aspect of the invention, a heated flooring assembly is provided, including a base layer having a plurality of studs arranged in a grid pattern, the base layer operable to be coupled to a flooring surface. A screed layer can be bonded to an upper surface of the base layer. A length of tubing can have an outer surface and an inner surface, the length of tubing operable to carry a fluid that creates a temperature differential between the length of tubing and the screed layer. The length of tubing can be retained between at least some of the studs, with at least the inner surface of the tubing having at least one projection extending inwardly therefrom, the projection increasing a rate at which heat is transferred between the tubing and the screed layer as the fluid travels through the length of tubing.

In accordance with another aspect of the invention, a heated flooring assembly is provided, including a base layer having a plurality of studs arranged in a grid pattern, the base layer operable to be coupled to a flooring surface. A screed layer can be bonded to an upper surface of the base layer. A length of tubing can have an outer surface and an inner surface, the length of tubing operable to carry a fluid that creates a temperature differential between the length of tubing and the screed layer, the length of tubing being retained between at least some of the studs. An insert can be disposed within the length of tubing, the insert being operable to increase a rate at which heat is transferred between the tubing and the screed layer as the fluid travels through the length of tubing.

BRIEF DESCRIPTION OF THE DRAWINGS

Additional features and advantages of the invention will be apparent from the detailed description which follows, taken in conjunction with the accompanying drawings, which together illustrate, by way of example, features of the invention; and, wherein:

FIG. 1 is a side cross-sectional view of a radiant heat flooring system according to one aspect of the present invention;
FIG. 2 is a perspective view of an exemplary base layer having a length of tubing embedded therein;
FIG. 3A and FIG 3B are end and side views, respectively, of a length of tubing having protrusions extending from an inner surface thereof;
FIG. 4 is a radial cross sectional view of a length of tubing having a series of peaks and valleys thereon;
FIG. 5A is a side view of a tube insert in accordance with an embodiment of the invention;
FIG. 5B is a perspective, partially sectioned view of the tube insert of FIG. 5A, with the insert positioned within a length of tubing;
FIG. 5C is an end view of the length of tubing and tube insert of FIG. 5B;
FIG. 6A is a side view of a pair of tube inserts in accordance with an embodiment of the invention, the tube inserts having the same directions of rotational flow;
FIG. 6B is a perspective, partially sectioned view of the tube inserts of FIG. 6A, with the inserts positioned within a length of tubing;
FIG. 6C is an end view of the length of tubing and tube inserts of FIG. 6B;
FIG. 7A is a side view of a pair of tube inserts in accordance with an embodiment of the invention, the inserts having different directions of rotational flow;
FIG. 7B is a perspective, partially sectioned view of the tube inserts of FIG. 7A, with the inserts positioned within a length of tubing;
FIG. 7C is an end view of the length of tubing and tube inserts of FIG. 7B;
FIG. 8A is a side view of a length of tubing in accordance with an aspect of the technology;
FIG. 8B is a more detailed view of a section of the length of tubing of FIG. 8A; and
FIG. 9 illustrates a matrix of thermally conductive rods inserted into a mortar layer in accordance with an embodiment of the invention.

Reference will now be made to the exemplary embodiments illustrated, and specific language will be used herein to describe the same. It will nevertheless be understood that no limitation of the scope of the invention is thereby intended.

### DETAILED DESCRIPTION OF EXAMPLE EMBODIMENT(S)

### Definitions

In describing and claiming the present invention, the following terminology will be used in accordance with the definitions set forth below.

Relative directional terms, such as "upper," "lower," "top," bottom," etc., are used herein to aid in describing various features of the present system. It is to be understood that such terms are generally used in a manner consistent with the understanding one of ordinary skill in the art would have of such systems. Such terms should not, however, be construed to limit the present invention.

As used herein, the term "substantially" refers to the complete, or nearly complete, extent or degree of an action, characteristic, property, state, structure, item, or result. As an arbitrary example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained.

The use of "substantially" is equally applicable when used in a negative connotation to refer to the complete or near complete lack of an action, characteristic, property, state, structure, item, or result. As another arbitrary example, a composition that is "substantially free of" particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint.

Distances, forces, weights, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited.

As an illustration, a numerical range of "about 1 inch to about 5 inches" should be interpreted to include not only the explicitly recited values of about 1 inch to about 5 inches, but also include individual values and sub-ranges within the indicated range. Thus, included in this numerical range are individual values such as 2, 3, and 4 and sub-ranges such as from 1-3, from 2-4, and from 3-5, etc.

This same principle applies to ranges reciting only one numerical value and should apply regardless of the breadth of the range or the characteristics being described.

### Invention

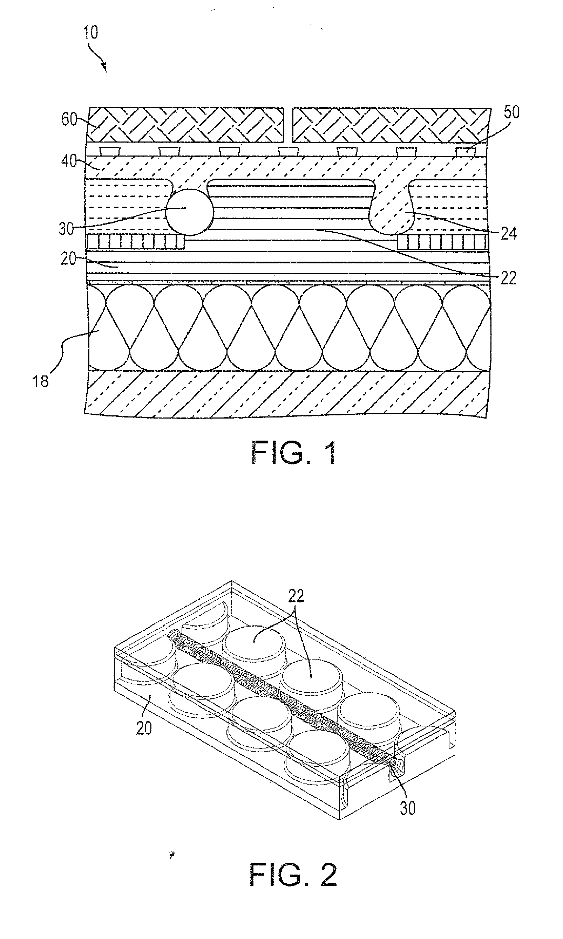

The present technology generally provides an in-floor hydronic or hydraulic radiant heating system. The system can be incorporated into a variety of flooring applications, for installation over a variety of subfloor types, and beneath a variety of finished flooring products. The present technology can include multiple layers of material, as illustrated generally in FIG. 1. This figure depicts one generalized embodiment of the multi-layer hydronic radiant heating system, shown generally at 10. While the term "heating system" is used throughout this specification, it is to be understood that the system transfers heat to and from various components. Thus, the system can be used to both cool and warm a room, as is dictated by any particular application.

In the example shown in FIG. 1, a bottom or base layer 20 can be provided for installation over a generalized subfloor 18. This base layer can be formed of a material such as expanded polystyrene (EPS) foam. While any substrate material may be used, base layer has been used with success, and particularly Schluter Systems' proprietary Bekotec® can be utilized in many of the examples provided herein. The EPS foam 20 provides a variety of advantages: it minimizes the heat lost to the ground or the rest of the building; it allows a good surface upon which a screed layer 40 can be installed; and it can minimize the amount of screed 40 that needs to be heated. Using less screed material 40 allows the system to operate at lower temperatures because a reduction in screed thickness also generally provides a reduction in the thermal resistance of the screed layer 40.

In addition, the base layer 20 can include a variety of studs or protrusions 22 that can be arranged in various grid patterns. The grid pattern can result in spaces 24 that are formed between each of the studs. These spaces are used for holding or retaining lengths of hydronic pipe or tubing 30 (these spaces 24 can be referred to herein as embedding spaces). Hydronic pipes or tubing 30 can be embedded in the embedding spaces 24 formed between the studs 22 of the base layer 20. The lengths of tubing 30 allow for heated or cooled water to be run through the pipes and thereby heat or cool the flooring assembly 10. A generalize perspective view of the base layer and tubing is illustrated in FIG. 2.

While the lengths of tubing or pipes 30 can be formed from a variety of materials, in one aspect they are formed of polypropylene. The polypropylene pipes function to allow the heated (or cooled) water to flow through the floor and heat the surrounding screed layer 40. The polypropylene provides structural flexibility that enables installation of the pipes 30 around the studs 22. The studs 22, and corresponding reduction in screed 40 thickness, allow the piping 30 to be positioned closer to the surface, which results in a drastically reduced floor heating response time. It should be appreciated that while polypropylene piping has been utilized with a certain degree of success, any suitable pipe material, as appreciated by one of ordinary skill in the art, may be utilized.

The fourth layer can include a decoupling membrane 50 which can be bonded to an upper surface of the screed layer 40. While any decoupling membrane may be used, Schluter Systems' proprietary DITRA® membrane has been utilized with a particular level of success. The decoupling membrane 50 can be mechanically bonded to the screed using mortar. Mortar can also be used on the top surface of the decoupling membrane 50 in order to install the tile 60 or other exposed flooring surface. The decoupling membrane 50 isolates the differential movement stresses that occur between the plane of the tile 60 and the substrate which prevents cracking of the grout and tiles in the event the floor is required to shift. The decoupling membrane 50 can be waterproof and be designed in a way that it allows an exit path for excess moisture contained in the substrate to escape through channels on its underside.

Lastly, a series of cut-back cavities can be provided in the upper surface of the decoupling membrane 50 in order to allow mortar spread therein to provide a series of column-like shapes that transfer loading directly from the flooring surface to the screed layer. These are some of the many benefits of using the Schluter Sytems Ditra® decoupling membrane: Ditra ® provides all of these features and is therefore able to distribute heavy loads without compromising the structural integrity of the exposed flooring surface.

One feature of the present invention is to increase the rate at which heat is transferred between the fluid within the hydronic tubing 30 to the flooring surface 60, which in turn will improve the response time of the overall system. A series of embodiments will be discussed herein which provide an increased thermal reaction time in the overall system, which thereby provides and an increase of heat transfer to the exposed flooring surface 60.

The response time can be improved by increasing the convective heat transfer coefficient between the fluid and the tubing, or alternatively, the convective heat transfer coefficient can be improved by increasing the surface area over which heat transfer occurs.

Currently employed systems utilize cylindrical polyethylene tubes. These tubes typically have an outer diameter of 16mm and an inner diameter of 11mm, with a sidewall thickness of approximately 2.5mm. The polyethylene has fair thermal conductivity, and good mechanical properties: meaning that it can be easily deformed and placed into base layer 20.

The first aspect of the present invention involves using polyethylene tubes having a thickness reduced to somewhere between about 2 mm and about 1.5 mm. The reasoning for this can be explained by Equation (1) known as Newton's law of heat conduction.

$$q` = h A \Delta T \ (1)$$

It suggests that heat transfer rate q' can be increased by one of three ways: first, by increasing the heat transfer coefficient "h," second, by increasing the area "A" over which the heat transfer occurs, or third, by increasing the temperature difference between the solid and the fluid.

Reducing the thickness causes an improvement in two of these categories:

First, it increases the area over which heat transfer occurs. This can be demonstrated through the following concept:

The inner surface area is given by the Equation (2):

$$A_s = \pi D_i L \ (2)$$

as the inner diameter is allowed to increase (thus providing a thinner sidewall), the surface area of the inside wall is increased thus increasing the surface area exposed to the heated or cooled fluid.

Second, by reducing the thickness of the tubing sidewall, heat transfer is improved because the heat transfer coefficient is affected by distance the heat must travel through a substance. Therefore, the rate of the heat flow from fluid to its surroundings is increased, as the thickness of the material through which the heat must travel is decreased, thus reducing the thermal resistance.

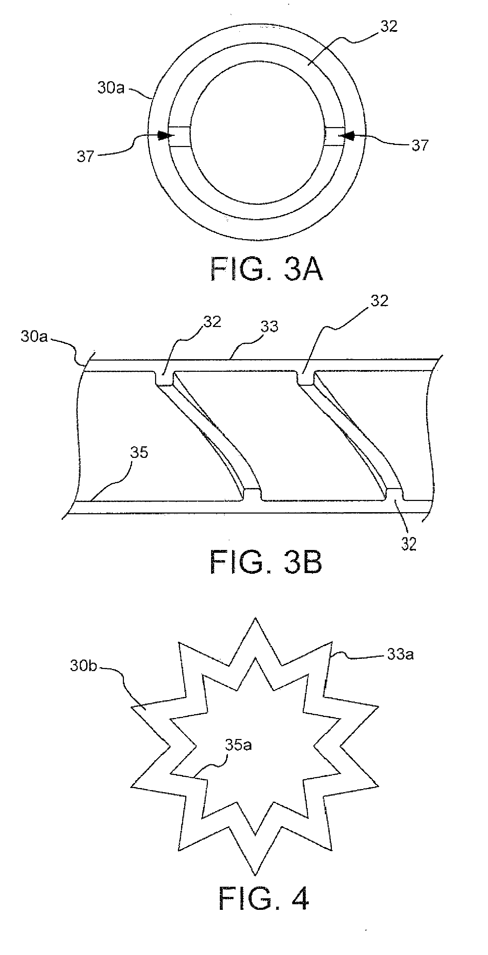

This implementation of providing a multi-layered heated flooring assembly is achieved by providing a bottom or base layer 20 having a plurality of studs 22 arranged in a grid pattern wherein the studs 22 define embedding spaces 24 therebetween. As shown by example in FIGs. 3A and 3B, a length of tubing 30 can be provided having an outer surface 33 and an inner surface 35. The length of tubing 30 can be embedded within at least one of the embedding spaces of the bottom or base layer, as described above.

The tubing 30 can be sealed into the base layer 20 by using a screed layer 40 bonded or otherwise applied to an upper surface of the base layer 20. Additionally, a decoupling membrane layer 50 can then be bonded to an upper surface of the screed layer 40. The upper surface can be defined by a plurality of upper surfaces of each of the plurality of studs 22, thereby sealing the length of tubing within the embedding spaces 24 of the base layer 20. Finally, an exposed upper flooring surface 60 can be installed on the decoupling membrane 50 by bonding the flooring surface using mortar or some other suitable flooring adhesive.

In the example shown in FIGs. 3A-3B, the length of tubing 30a includes one or more protrusions 32 that extend from the inner surface 35 of the tubing. In this aspect, the protrusions also extend longitudinally within the tubing, and are configured in a helical pattern along the length of the tube. In this example, two gaps 37 are provided between two protrusions, projections or the like 32. The protrusions or fins 32 increase the surface area in which the fluid is in contact with, thereby increasing a rate at which heat is transferred between the fluid and the tubing. In addition, the fins or protrusions can promote mixing of the fluid within the tubes. This can lead to portions of the fluid at higher temperatures coming into contact with the walls of the tubes, and driving portions of the fluid at lower temperatures toward the center of the tube.

In the example shown in FIGs. 3A and 3B, the inner surface 35 of the length of tubing 30a includes protrusions or fins extending inwardly therefrom. The outer surface 33, however, is in the shape of a conventional tube, having a cylindrical shape. In other embodiments, however, the protrusions can extend from the outer surface and not the inner surface; from both the outer surface and the inner surface; or the tube can include a cross section in which a series of peaks and valleys extend alternately inwardly and outwardly. One such example is shown in FIG. 4, where outer surface 33a and inner surface 35a include substantially matching contours. As this is a cross sectional view, it will be apparent that the protrusions or projections in this example extend along the length of the section of tubing (into the page of FIG. 4).

The "star" shape shown in FIG. 4 can increase the hydraulic diameter of the tubing as well as increasing the surface area, while not necessarily increasing the effective outer diameter. The increased surface area and hydraulic diameter increases the heat transfer rate using the same principles as discussed above regarding increasing surface area as well as increasing the hydraulic diameter. This can equate to more fluid passing through the tubing with less resistance and at a higher speed, thus more evenly distributing the heat through the length of tubing.

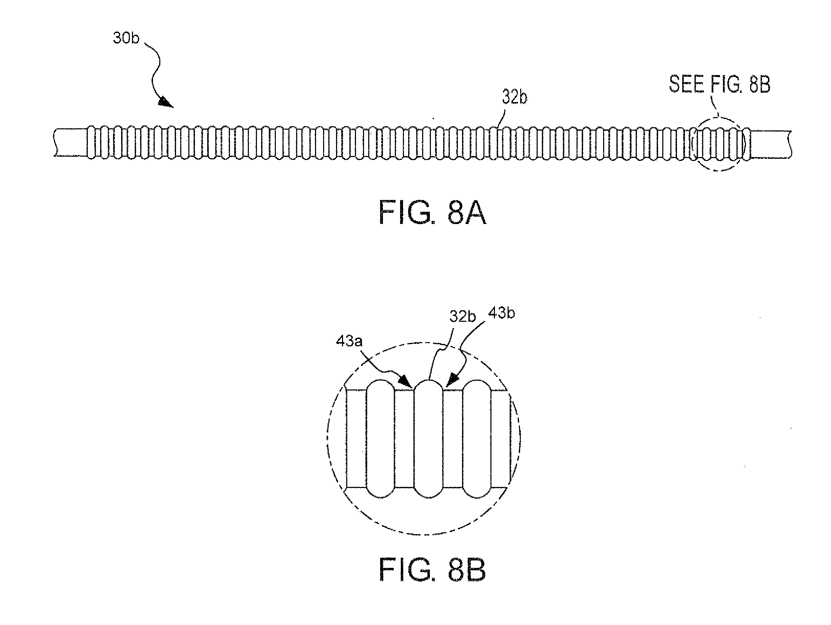

In the example shown in FIGs. 8A and 8B, a series of projections or protrusions 32b extend from an outer surface of the length of tubing 30b. As can be seen, a regular, repeating pattern of protrusions is provided. In this example, the inner surface of the tubing (not shown in detail) can include a substantially smooth surface, or it can include a surface that substantially matches the contour of the outer surface. This is somewhat analogous to corrugated sheeting. This so-called corrugated tubing increases the surface area and induces mixing with each of the corrugations. Heat transfer rates are therefore increased using the same principles as discussed above regarding mixing and increasing surface area. Additionally, it is believed that such corrugated tubing can be relatively inexpensively obtained and readily available, thus providing a reduced cost and ease of access not realized by prior art systems.

As shown in FIG. 8B, in one aspect, the projection (32b in this case) can include a first base side 43a and a second base side 43b. The first and second base sides can be displaced longitudinally along the length of tubing relative to one another. The projection 32b can extend radially outwardly from and between the first and second base sides.

While the corrugations are shown in FIG. 8A as extending along substantially the entire length of the tube, it is to be understood that sections of the tubing can vary in geometry. For example, in one aspect of the invention the tubing can include sections of substantially "straight" or conventional tubing, with alternating sections of "corrugated" tubing. Similar altering patterns can be achieved with the other embodiments discussed herein (e.g., straight sections can alternate with ribbon-tape sections alternating with corrugated sections, etc.). Also, while most of the figures illustrate relatively straight runs of tubing, it is to be understood that the tubing will typically be routed around and through the various studs shown. Thus, the various projections, corrugations, modified cross sections, etc., of the tubing sections can bend and turn about the studs, as dictated by any particular application.

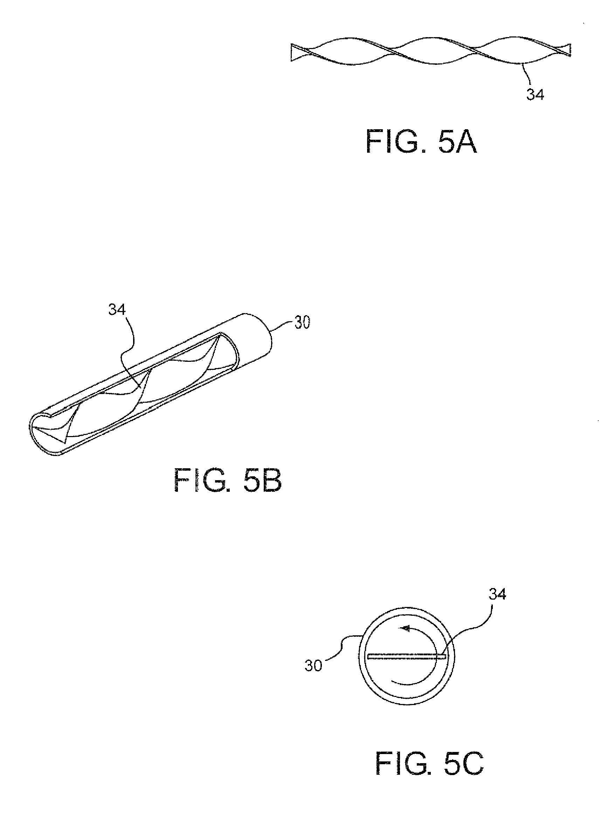

FIGs. 5A through 7C illustrate another aspect of the invention. In these examples, an insert 34, 34a, 34b, 34a', 4b', etc., is shown disposed within the lengths of tubing 30. The insert can be formed of a generally planar sheet or strip of material that twists in a helical pattern as it extends along the length of the tubing. This aspect can be advantageous in that it does require a change in the tubing dimensions. In this embodiment, as fluid passes through the tubes 30 and over the twisted strips 34, the convective heat transfer coefficient is increased by introducing swirls into the motion of the fluid (forcing the fluid to experience turbulent flow). This turbulent flow disrupts the boundary layer of the fluid at the inside tube surface. The turbulence and the vortex motion results in higher Nusselt number, and therefore results in higher heat transfer coefficient because new fluid is constantly coming into contact with the walls of the pipe. Fluid that has had heat removed is constantly being exchanged from the area near the pipe walls.

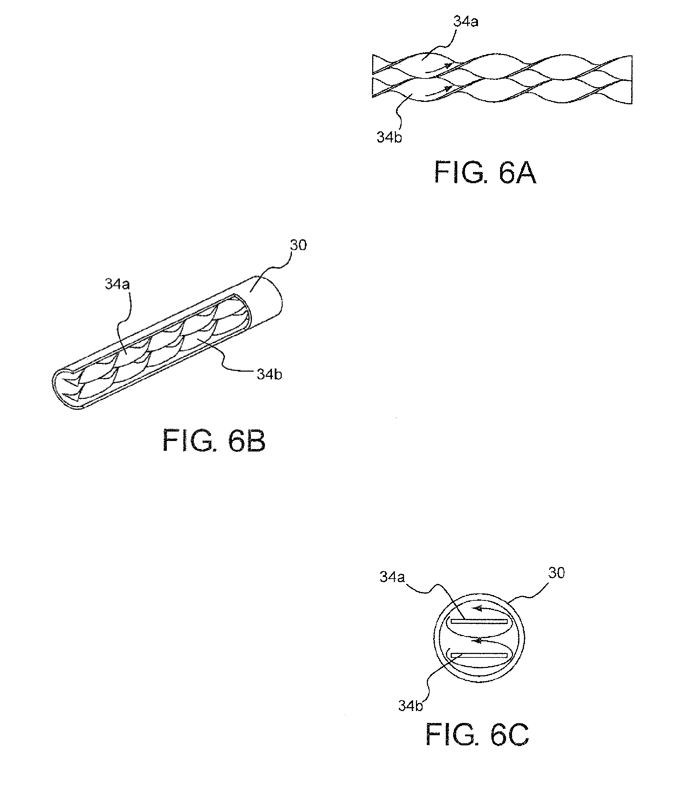

By altering the configuration of the strips or tapes 34, different types of mixing can be achieved. For example, the embodiment illustrated in FIGs. 5A-5C includes a single twisted or helical tape insert 34 that can create a single helical flow. Alternatively, in the example shown in FIGs. 6A-6C, a pair of inserts 34a, 34b are utilized in a side-by-side arrangement to create multiple helixes and further improve mixing. It should be appreciated that the number of twisted tape inserts may have an effect on the flow resistance and thereby cause an increased load on the water pump. Pump pressure and flow capacities can therefore be adjusted accordingly.

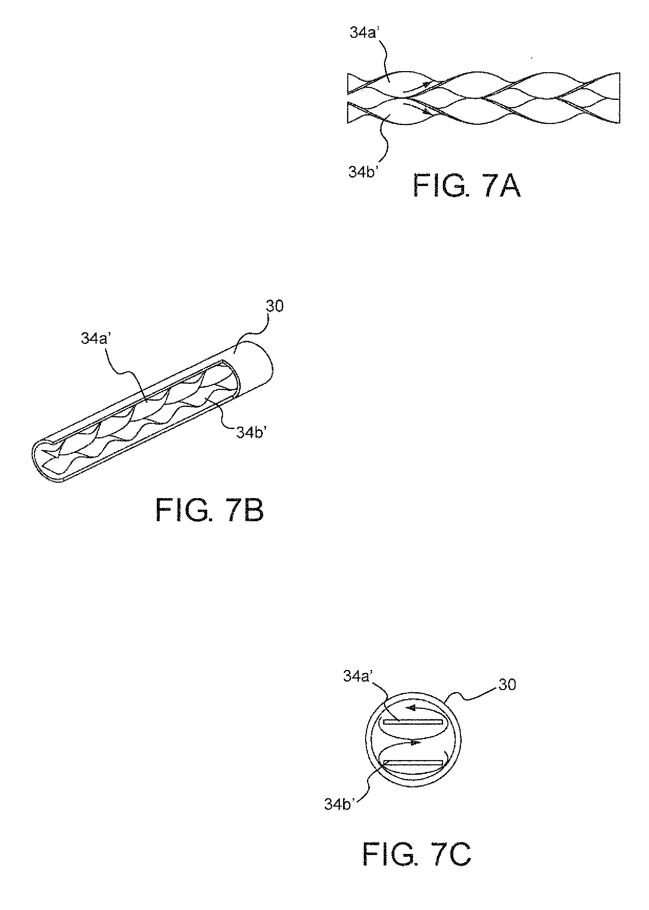

In the example shown in FIGs. 7A-7C, a pair of inserts 34a' and 34b' are utilized. In this case, however, the inserts induce flow in different (in this case, opposite) directions of rotation.

In another aspect of the present invention, the radiant heat flooring system's response time can be reduced by adding thermally conductive materials to the mortar layer of the flooring system, between the base layer and the decoupling membrane. This can improve the thermal conductivity of the layers above the heating pipes by reducing the thermal resistance of those layers. The addition of the thermally conductive materials to the mortar layers provides numerous low resistance paths by which heat can travel to and thereby heat the flooring surface. While the following list is not meant to be exhaustive, materials which may be added to the mortar layers include, but are not limited to, copper, aluminum, zinc, and steel, carbon fiber, fiberglass, and combinations thereof.

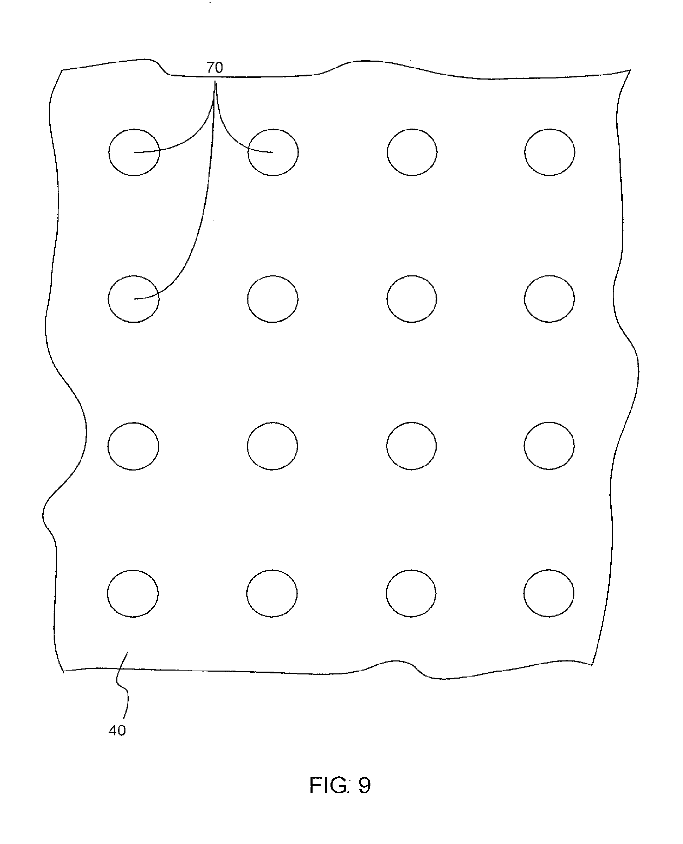

The conductive materials can be added to the mortar layer in a number of methods. In one exemplary aspect, shown in FIG. 9, the conductive materials are provided throughout the mortar layer 40 by providing a series of rods or posts 70 being formed of conductive material and being spaced in a matrix throughout the mortar layer.

Alternatively, conductive material may be added to the mortar by adding conductive chips or flakes to the mortar compound prior to it setting. While the rods or posts 70 would provide complete thermal paths through which the heat will be able to flow at various points throughout the mortar, the flakes or chips may provide a more uniform heat dispersion across the entire flooring surface. Additionally, the flake or chip method may be much less labor intensive and more practical, and thus improve the value of the modification. The behavior of the thermal conductivity in the mortar when adding these chips can be tailored so as to differ from the embodiment if the metal were added in the form of solid rods. This is because complete thermal pathways through the mortar would not be seen with the chips or flakes until some critical value of metal (or other additive) concentration is achieved. At this critical mixing point the thermal conductivity would be greatly improved, and would improve further with a higher concentration of conductive material; however below this critical value the increase in thermal conductivity would be lower. It should be appreciated that the amount of conductive material necessary will vary based on the grain size of the chips or flakes and one of ordinary skill in the art would recognize that some experimentation may be necessary to find a proper balance for each type of conductive material.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

**Claims**

1. A heated flooring assembly, comprising:

   a base layer having a plurality of studs arranged in a grid pattern, the base layer operable to be coupled to a flooring surface;
   a screed layer bonded to an upper surface of the base layer; and
   a length of tubing having an outer surface and an inner surface, the length of tubing operable to carry a fluid that creates a temperature differential between the length of tubing and the screed layer, the length of tubing being retained between at least some of the studs, at least the outer surface of the length of tubing having at least one projection extending outwardly therefrom, the projection increasing a rate at which heat is transferred between the length of tubing and the screed layer as the fluid travels through the length of tubing.

2. The assembly of claim 1, wherein the at least one projection extends radially outwardly from the outer surface of the length of tubing.

3. The assembly of claim 2, wherein the at least one projection includes a first base side and a second base side, the first base side being displaced longitudinally along the length of tubing from the second base side, with the projection extending radially outwardly between the first and second base sides.

4. The assembly of claim 1, wherein the at least one projection extends longitudinally along the outer surface of the length of tubing.

5. The assembly of claim 4, wherein the length of tubing includes a cross section having a series of peaks and valleys defined therein.

6. The assembly of claim 1, wherein the inner surface of the length of tubing includes a surface contour that substantially matches a surface contour of the outer surface of the length of tubing.

7. The assembly of claim 1, wherein the at least one projection extends along an area of the length of tubing that can be wrapped about one or more of the studs.

8. A heated flooring assembly, comprising:

a base layer having a plurality of studs arranged in a grid pattern, the base layer operable to be coupled to a flooring surface;
a screed layer bonded to an upper surface of the base layer; and
a length of tubing having an outer surface and an inner surface, the length of tubing operable to carry a fluid that creates a temperature differential between the length of tubing and the screed layer, the length of tubing being retained between at least some of the studs, at least the inner surface of the tubing having at least one projection extending inwardly therefrom, the projection increasing a rate at which heat is transferred between the tubing and the screed layer as the fluid travels through the length of tubing.

9. The assembly of claim 8, wherein the at least one projection extends radially inwardly from the inner surface of the length of tubing.

10. The assembly of claim 9, wherein the at least one projection includes a first base side and a second base side, the first base side being displaced longitudinally along the length of tubing from the second base side, with the projection extending radially inwardly between the first and second base sides.

11. The assembly of claim 10, wherein the at least one projection extends both radially inwardly within the length of tubing, and longitudinally along the length of tubing.

12. The assembly of claim 11, wherein the at least one projection extends along a helical path within the length of tubing.

13. The assembly of claim 8, wherein the length of tubing includes a cross section having a series of peaks and valleys defined therein.

14. The assembly of claim 8, wherein the inner surface of the length of tubing includes a surface contour that substantially matches a surface contour of the outer surface of the length of tubing.

15. The assembly of claim 8, wherein the at least one projection extends along an area of the length of tubing that can be wrapped about one or more of the studs.

16. A heated flooring assembly, comprising:

a base layer having a plurality of studs arranged in a grid pattern, the base layer operable to be coupled to a flooring surface;
a screed layer bonded to an upper surface of the base layer;
a length of tubing having an outer surface and an inner surface, the length of tubing operable to carry a fluid that creates a temperature differential between the length of tubing and the screed layer, the length of tubing being retained between at least some of the studs; and
an insert, disposed within the length of tubing, the insert being operable to increase a rate at which heat is transferred between the tubing and the screed layer as the fluid travels through the length of tubing.

17. The assembly of claim 16, wherein the insert includes at least a first planar member that twists helically along a length of the planar member, the planar member inducing rotational fluid flow through the length of tubing.

18. The assembly of claim 17, further comprising a second planar member that twists helically along a length of the planar member, the second planar member inducing rotational fluid flow through the length of tubing.

19. The assembly of claim 18, wherein the first planar member and the second planar member induce rotational fluid flow through the length of tubing in the same direction of rotation.

20. The assembly of claim 18, wherein the first planar member and the second planar member induce rotational fluid flow through the length of tubing in different directions of rotation.

**FIG. 1**

**FIG. 2**

FIG. 3A

FIG. 3B

FIG. 4

FIG. 5A

FIG. 5B

FIG. 5C

FIG. 6A

FIG. 6B

FIG. 6C

FIG. 7A

FIG. 7B

FIG. 7C

30b

32b

SEE FIG. 8B

FIG. 8A

43a

32b 43b

FIG. 8B

EP 2 876 375 A2

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61907948 A